# EUROPÄISCHE PATENTSCHRIFT

(11) **EP 1 277 395 B1**
(45) Veröffentlichungstag und Bekanntmachung des Hinweises auf die Patenterteilung: **19.12.2007**
(21) Anmeldenummer: 02014750.0
(22) Anmeldetag: 04.07.2002
(51) Int. Cl.: A01F 29/10

(54) **Verfahren zum Häckseln eines strangförmigen Erntegutstromes sowie Häckselaggregat zur Durchführung des Verfahrens**
Method for chopping a strand of crop material and device for performing the method
Procédé pour hâcher un flux de matière récoltée et dispositif pour la mise en oeuvre de procédé

(30) Priorität: 19.07.2001 DE 10134436
(43) Veröffentlichungstag der Anmeldung: 22.01.2003
(73) Patentinhaber: CLAAS Selbstfahrende Erntemaschinen GmbH, 33428 Harsewinkel (DE)
(72) Erfinder: Dellbrügge, Horst, 33790 Halle (DE)

(56) Entgegenhaltungen:
- EP-A- 0 872 171
- DE-A- 1 958 562
- DE-A- 3 324 897
- US-A- 6 082 647

## Beschreibung

Die Erfindung betrifft ein Verfahren zum Häckseln eines strangförmigen Erntegutstromes, insbesondere eines silierfähigen Futtergutstromes, der von einem Erntevorsatzgerät aus mittels einer Fördereinrichtung kontinuierlich einem einer rotierend antreibbare Häckseltrommel aufweisenden Häckselaggregat zugeführt wird. Die Erfindung bezieht sich ferner auf ein Häckselaggregat zur Durchführung dieses Verfahrens.

Bei den bislang bekannten Verfahren, siehe z.B. EP-A-0872171 wird das zu häckselnde Gut mittels des Erntevorsatzgerätes gemäht oder von einer Pick Up - Einrichtung aus dem Schwad aufgenommen und in den Bereich einer Übergabezone transportiert. Dort gelangt das Häckselgut in einen Einzugsförderer, der es zum Häckselaggregat transportiert. Das Häckselaggregat ist mit einer rotierend antreibbaren Häckseltrommel ausgerüstet, welche mit mehreren im Winkelabstand zueinander stehenden Trommelmessern bestückt ist, deren Schneidkanten auf einem Zylindermantel liegen. Der Häckseltrommel ist ein feststehender Schneidbalken zugeordnet, der unterhalb des Erntegutstromes liegt. Derartige Verfahren haben sich in der Praxis bestens bewährt. Es ist jedoch bekannt, dass die Leistungen der nach den beschriebenen Verfahren arbeitenden Maschinen ständig erhöht werden sollen, um die Wirtschaftlichkeit zu steigern bzw. sicherzustellen.

Der Erfindung liegt die Aufgabe zugrunde, ein Verfahren aufzuzeigen, wonach eine danach arbeitende Maschine in ihrer Leistungsfähigkeit gesteigert wird, ohne dass sich die Güte des Häckselgutes verschlechtert. Der Erfindung liegt außerdem die Aufgabe zugrunde, ein nach dem Verfahren arbeitendes Häckselaggregat zu schaffen, welches konstruktiv einfach ist und betriebssicher arbeitet.

Die auf das Verfahren gerichtete Aufgabe wird gelöst, indem der strangförmige Erntegutstrom in wenigstens zwei Erntegutteilströme aufgeteilt wird und diese Erntegutteilströme dem Häckselaggregat zugeführt werden.

Durch die Aufteilung des Erntegutstromes wird entweder die Dicke oder die Breite reduziert. Dadurch wird die von den Trommelmessern aufzubringende Kraft herabgesetzt, so dass sich die Leistung entsprechend erhöht. Zudem ermöglicht das gleichzeitige Häckseln mehrerer Gutströme eine Erhöhung der Durchsatzleistung, in der Weise, dass die Zuführgeschwindigkeit des zu häckselnden Erntegutstromes erhöht wird. Die Güte des Häckselgutes leidet darunter nicht. Der konstruktive Aufwand für ein nach dem Verfahren arbeitendes Häckselaggregat ist äußerst gering. Gemäß einer Möglichkeit zur Durchführung des Verfahrens ist vorgesehen, dass der Erntegutstrom in seiner Längsrichtung in wenigstens zwei übereinander und im Abstand zueinander liegende Erntegutteilströme aufgeteilt wird. Eine solche Möglichkeit erfordert keine konstruktive oder keine wesentliche konstruktive Änderung der Häckseltrommel. Es ist lediglich erforderlich, dass entsprechend der Anzahl der Erntegutteilströme das Häckselaggregat mit einer entsprechenden Stückzahl von Schneidbalken ausgestattet wird. Dabei ist es dann vorteilhaft, wenn die Dicken der Erntegutteilströme gleich oder annähernd gleich sind. Die gleichen Dicken führen dann nicht zu stoßartigen Belastungen der Häckseltrommel und der die Häckseltrommel antreibenden Antriebselemente. Gemäß einem weiteren Verfahren ist es auch möglich, dass der Erntegutstrom in seiner Längsrichtung in wenigstens zwei nebeneinander liegende Erntegutteilströme aufgeteilt wird. Die Breiten der Erntegutteilströme sind dann gleich oder annähernd gleich. Um auch hier die Vorteile des zeitlich versetzten Häckselvorganges ausnutzen zu können, ist in erster Ausführung vorgesehen, dass die nebeneinander liegenden Erntegutteilströme nach der Teilung in der Förderrichtung des ungeteilten Erntegutstromes in einer Schräglage derart weitergefördert werden, dass sie übereinander sowie im Abstand zueinander liegend dem Häckselaggregat zugeführt werden. Ein Häckselaggregat müsste dann wiederum mit einer entsprechenden Stückzahl von Schneidbalken ausgestattet sein.

Es ist jedoch auch möglich, dass das Häckselaggregat mit einer der Anzahl der Erntegutteilströme entsprechenden Stückzahl von Häckseltrommeln ausgerüstet ist. Jede Häckseltrommel könnte dann mit einem Antrieb ausgestattet sein, so dass in leistungssteigernder Weise die von den Häckseltrommeln aufgebrachten Momente insgesamt größer sind als wenn nur mit einer Häckseltrommel gearbeitet würde.

Das Häckselaggregat ist in bevorzugter Ausführung mit zwei der Häckseltrommel vorgeschalteten Förder- und Presswalzen ausgestattet. Die auf das Häckselaggregat gerichtete Aufgabe wird gelöst, indem zwischen dem Häckselaggregat und den Förder- und Presswalzen eine Aufteileinrichtung vorgesehen ist, die vorzugsweise noch innerhalb der senkrechten Projektion der Förder- und Presswalzen liegt. Diese Aufteileinrichtung ist besonders geeignet, wenn der Erntegutteilstrom in zwei oder mehr übereinander liegende Erntegutteilströme aufgeteilt wird. Diese Aufteileinrichtung besteht dann in bevorzugter Ausführung aus wenigstens einem horizontal stehenden Messer, welches bzw. welche feststehend oder oszillierend antreibbar sind. Die Anzahl der Messer richtet sich nach der Anzahl der Erntegutteilströme. Zwischen dem Messer bzw. den Messern und der Häckseltrommel müssten dann entsprechend ausgelegte Leitelemente für die Führung der Erntegutteilströme vorgesehen werden.

Soll der Erntegutstrom in zwei oder mehr nebeneinander liegende Erntegutteilströme aufgeteilt werden, ist vorgesehen, dass die Aufteileinrichtung aus wenigstens einem vertikal stehenden Messer besteht, welches feststehend oder als um eine horizontale Achse antreibbar ausgeführt ist, und dass dieses wenigstens eine Messer als Kreismesser ausgelegt ist. Dadurch wird eine Schneidscheibe geschaffen, die die Aufteilung des Erntegutstromes erleichtert. Das Messer bzw. die Messer sind zweckmäßigerweise dort angeordnet, wo der Erntegutstrom vom Erntevorsatzgerät her gebildet wird. Demzufolge ist das Messer bzw. sind die Messer entweder am Erntevorsatzgerät oder direkt angrenzend an dem Erntevorsatzgerät angeordnet. Wie bereits gesagt, ist es möglich, dass bei der Aufteilung des Erntegutstromes in zwei oder mehr nebeneinander liegende Erntegutteilströme mit einer entsprechenden Stückzahl von Häckseltrommeln gearbeitet wird. Es ist jedoch vorgesehen, sie durch Schrägförderung in eine übereinander liegende Lage zu bringen. Demzufolge müssten der Häckseltrommel zwei oder mehr Schneidbalken funktionell zugeordnet werden.

Anhand der beiliegenden Zeichnungen wird die Erfindung noch näher erläutert.

Es zeigen:
- Figur 1: ein nach dem erfindungsgemäßen Verfahren arbeitendes Häckselaggregat in einer Seitenansicht und
- Figur 2: den vorderen Bereich eines Häckslers, das Erntevorsatzgerät, die Transportvorrichtung und die Häckseltrommel in Draufsicht.

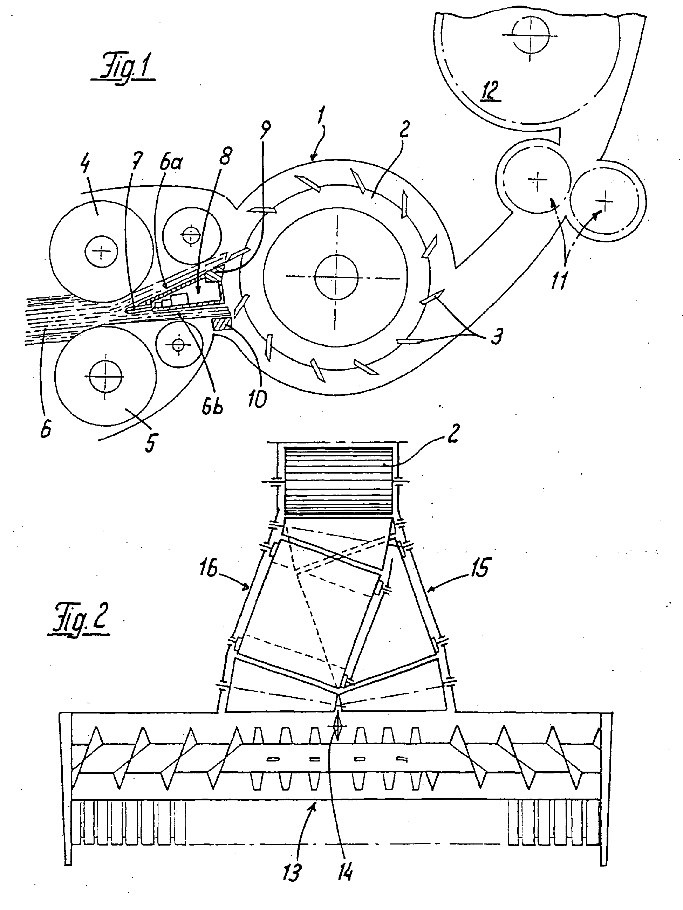

Das in der Fig. 1 rein schematisch dargestellte Häckselaggregat 1 ist mit einer Häckseltrommel 2 ausgestattet, welches mit einer Vielzahl von im Abstand zueinander stehenden Trommelmessern 3 bestückt ist. Die Trommelmesser 3 schließen gegenüber der an die Häckseltrommel 2 gelegten Tangente einen spitzen Winkel ein. Der Häckseltrommel 2 sind zwei Förderwalzen 4, 5 vorgeschaltet, durch deren Walzenspalt der Erntegutstrom 6 geführt wird. Wie die Fig. 1 deutlich zeigt, sind die Förderwalzen 4, 5 in einem solchen Abstand zueinander gelagert, dass der Erntegutstrom 6 verdichtet wird. Unmittelbar anschließend an den Walzenspalt ist ein horizontales Messer 7 angeordnet, um den Erntegutstrom 6 in zwei Erntegutteilströme 6a, 6b aufzuteilen. An das Messer schließt sich ein im Querschnitt dreieckförmiges Leitelement 8 an, um die Erntegutteilströme den Schneidbalken 9, 10 zuzuführen. Entgegen der Darstellung könnte der Erntegutstrom 6 auch in mehr als zwei Erntegutteilströme aufgeteilt werden. Es müssten dann eine entsprechende Anzahl von Messern 7 vorgesehen sein. Daran anschließen müssten sich entsprechend ausgelegte Leitelemente. Außerdem wären dann mehrere Schneidbalken 9, 10 notwendig.

Im dargestellten Ausführungsbeispiel sind die Schneidbalken 9, 10 in einem solchen Abstand zueinander angeordnet, dass die Erntegutteilströme 6a, 6b gleichzeitig durch zwei aufeinander folgende Trommelmesser 3 gehäckselt werden. Auf diese Weise verkürzt sich die zum Häckseln des gesamten Futterstranges erforderliche Zeit, sodass je Zeiteinheit eine Durchsatzsteigerung erzielt werden kann.
Entgegen dieser Ausführung könnte der Abstand zwischen den Schneidbalken 9, 10 so gewählt werden, dass das Häckseln der Erntegutteilströme 6a, 6b zeitlich versetzt erfolgt. Dadurch wäre das jeweils aufzubringende Moment geringer. Dem Häckselaggregat 1 ist eine Aufbereitungseinrichtung 11 nachgeschaltet, die mit einem Walzensystem ausgerüstet ist. Durch dieses Walzensystem werden beispielsweise Körner zerstört. Unmittelbar hinter der Aufbereitungseinrichtung 11 ist eine Nachbeschleunigungseinrichtung 12 vorgesehen, um das gehäckselte Gut auf einen Transportwagen zu blasen.

Bei der Ausführung nach der Fig. 2 ist innerhalb des Erntegutvorsatzgerätes 13 ein rotierend antreibbares Schneidmesser 14 vorgesehen, um den gebildeten Erntegutstrom 6 in seiner Breite vertikal zu teilen. Entgegen der Darstellung könnten auch mehrere Schneidmesser den Erntegutstrom 6 zerteilen. Dem Erntevorsatzgerät 13 sind im Ausführungsbeispiel zwei Schrägförderer 15, 16 nachgeschaltet, um die Erntegutteilströme 6a, 6b in eine übereinander liegende Stellung zu transportieren. Sie werden dann wiederum der Häckseltrommel 2 zugeführt. Auch bei dieser Ausführung sind der Häckseltrommel 2 wiederum zwei Schneidbalken 9, 10 zugeordnet. Der Häckselvorgang der beiden Häckselgutteilströme 6a, 6b könnte gleichzeitig oder auch zeitlich versetzt erfolgen. Entgegen der Darstellung nach der Fig. 2 wäre es auch denkbar, dass entsprechend der Anzahl der Häckselgutteilströme 6a, 6b das Häckselaggregat 1 mit einer entsprechenden Stückzahl von Häckseltrommeln 2 ausgestattet ist. Diese könnten von einem gemeinsamen Antrieb oder auch von Einzelantrieben angetrieben werden.

Die Erfindung ist nicht auf die dargestellten Ausführungsbeispiele beschränkt. Wesentlich ist, dass der mittels des Erntevorsatzgerätes 13 gebildete Erntegutstrom in zwei oder mehr Erntegutteilströme aufgeteilt wird, und dass diese Erntegutteilströme 6a, 6b dem Häckselaggregat 1 getrennt zugeführt werden.

### Bezugszeichenliste

- 1.: Häckselaggregat
- 2.: Häckseltrommel
- 3.: Trommelmesser
- 4.: Förderwalze
- 5.: Förderwalze
- 6.: Erntegutstrom
- 6a.: Erntegutteilstrom
- 6b.: Erntegutteilstrom
- 7.: Messer
- 8.: Leitelement
- 9.: Schneidbalken
- 10.: Schneidbalken
- 11.: Häckselaggregat
- 12.: Nachbeschleunigungseinrichtung
- 13.: Erntegutvorsatzgerät
- 14.: Schneidmesser
- 15.: Schrägförderer
- 16.: Schrägförderer

## Patentansprüche

1. Verfahren zum Betreiben eines Feldhäckslers zum Häckseln eines strangförmigen Erntegutstromes, insbesondere eines silierfähigen Futtergutstromes, der von einem Erntevorsatzgerät aus mittels einer Fördereinrichtung kontinuierlich einem eine rotierend antreibbare Häckseltrommel aufweisenden Häckselaggregat zugeführt wird, **dadurch gekennzeichnet, dass** der strangförmige Erntegutstrom (6) in wenigstens zwei Erntegutteilströme (6a, 6b) aufgeteilt wird, und diese Erntegutströme (6a, 6b) dem Häckselaggregat (1) zugeführt werden.

2. Verfahren nach Anspruch 1, **dadurch gekennzeichnet, dass** der Erntegutstrom (6) in seiner Längsrichtung in wenigstens zwei übereinander und im Abstand zueinander liegende Erntegutteilströme (6) aufgeteilt wird.

3. Verfahren nach einem oder mehreren der vorhergehenden Ansprüche, **dadurch gekennzeichnet, dass** die Dicken der Erntegutteilströme (6a, 6b) gleich oder annähernd gleich sind.

4. Verfahren nach Anspruch 1, **dadurch gekennzeichnet, dass** der Erntegutstrom in seiner Längsrichtung in wenigstens zwei nebeneinander liegende Erntegutteilströme (6a, 6b) aufgeteilt wird.

5. Verfahren nach Anspruch 4, **dadurch gekennzeichnet, dass** die Breiten der Erntegutteilströme (6a, 6b) gleich oder annähernd gleich sind.

6. Verfahren nach einem oder mehreren der vorhergehenden Ansprüche, **dadurch gekennzeichnet, dass** die nebeneinander liegenden Erntegutteilströme (6) nach der Teilung in Förderrichtung des ungeteilten Erntegutstromes (6) in einer Schräglage derart weitergefördert werden, dass sie übereinander sowie im Abstand zueinander liegend dem Häckselaggregat (1) zugeführt werden.

7. Verfahren nach einem oder mehreren der vorhergehenden Ansprüche, **dadurch gekennzeichnet, dass** das Häckselaggregat mit einer der Anzahl der Erntegutteilströme (6) entsprechenden Stückzahl von Häckseltrommeln (2) ausgerüstet ist.

8. Verfahren nach Anspruch 7, **dadurch gekennzeichnet, dass** die Häckseltrommeln (2) von einem gemeinsamen Antrieb oder von Einzelantrieben antreibbar sind.

9. Verfahren nach einem oder mehreren der vorhergehenden Ansprüche 1 bis 8, **dadurch gekennzeichnet, dass** die aus dem Erntegutstrom (6) gebildeten Erntegutteilströme (6a, 6b) mittels des Häckselaggregates (1) vorzugsweise im zeitlichen Versatz gehäckselt werden.

10. Vorrichtung zur Durchführung des Verfahrens nach Anspruch 1, bei welchem dem Häckselaggregat vorzugsweise zwei übereinander liegende Förder- und Presswalzen vorgeschaltet sind, **dadurch gekennzeichnet, dass** zwischen dem Häckselaggregat (1) und den Förder- und Presswalzen (4, 5) eine Aufteileinrichtung (7, 8, 14) vorgesehen ist, die vorzugsweise noch innerhalb der senkrechten Projektion der Förder- und Presswalzen (4,5) liegt und zur Aufteilung eines strangförmigen Erntegutstroms in wenigstens zwei Erntegutteilströme dient.

11. Vorrichtung nach Anspruch 10, **dadurch gekennzeichnet, dass** die Aufteileinrichtung (7, 8, 14) wenigstens ein horizontal stehendes Messer (7) aufweist, welches bzw. welche feststehend oder oszillierend antreibbar sind.

12. Vorrichtung nach Anspruch 11, **dadurch gekennzeichnet, dass** dem horizontal stehenden Messer (7) bzw. den horizontal stehenden Messern (7) Leitelemente (8) für die Führung der Erntegutteilströme (6a, 6b) zugeordnet sind.

13. Vorrichtung nach Anspruch 10, **dadurch gekennzeichnet, dass** die Aufteileinrichtung (7,8,14) aus wenigstens einem vertikal stehenden Messer (14) besteht, wobei das wenigstens eine Messer (14) feststehend oder als um eine horizontale Achse antreibbar ausgebildet ist, und dass jedes Messer (14) als Kreismesser ausgelegt ist.

14. Vorrichtung nach Anspruch 13, **dadurch gekennzeichnet, dass** das Häckselaggregat (1) mit einer der Anzahl der Erntegutteilströme (6a,6b) entsprechenden Stückzahl von feststehenden, horizontalen sowie im Abstand zueinander stehenden Schneidbalken (10) ausgestattet ist.

15. Vorrichtung nach Anspruch 13, **dadurch gekennzeichnet, dass** das Messer (14) bzw. die Messer (14) am Erntevorsatzgerät (13) oder direkt daran angrenzend angeordnet sind.

16. Vorrichtung nach Anspruch 15, **dadurch gekennzeichnet, dass** dem Erntevorsatzgerät (13) Schrägförderer (15, 16) derart nachgeschaltet sind, dass die Erntegutteilströme (6a,6b) übereinander und im Abstand zueinander dem Häckselaggregat (1) zuführbar sind.

## Claims

1. A method of operating a forage harvester for chopping a flow of crop material in strand form, in particular a silable fodder material flow which is continuously fed from a harvesting front-mounted implement by means of a conveyor device to a chopping assembly having a chopping drum which is drivable in rotation, **characterised in that** the flow of crop material (6) in strand form is divided into at least two partial flows (6a, 6b) of crop material and said crop material flows (6a, 6b) are fed to the chopping assembly (1).

2. A method according to claim 1 **characterised in that** the flow of crop material (6) is divided in its longitudinal direction into at least two partial flows (6) of crop material which are one above the other and at a spacing relative to each other.

3. A method according to one or more of the preceding claims **characterised in that** the thicknesses of the partial flows (6a, 6b) of crop material are identical or approximately identical.

4. A method according to claim 1 **characterised in that** the flow of crop material is divided in its longitudinal direction into at least two mutually juxtaposed partial flows (6a, 6b) of crop material.

5. A method according to claim 4 **characterised in that** the widths of the partial flows (6a, 6b) of crop material are identical or approximately identical.

6. A method according to one or more of the preceding claims **characterised in that** after division in the conveyor direction of the undivided flow (6) of crop material the mutually juxtaposed partial flows (6) of crop material are further conveyed in an inclined position in such a way that they are fed to the chopping assembly (1) disposed in mutually superposed and spaced relationship.

7. A method according to one or more of the preceding claims **characterised in that** the chopping assembly is equipped with a number of chopping drums (2), corresponding to the number of partial flows (6) of crop material.

8. A method according to claim 7 **characterised in that** the chopping drums (2) are drivable by a common drive or by individual drives.

9. A method according to one or more of the preceding claims 1 to 8 **characterised in that** the partial flows (6a, 6b) formed from the flow (6) of crop material are chopped by means of the chopping assembly (1) preferably in time-displaced relationship.

10. Apparatus for carrying out the method according to claim 1 wherein preferably two mutually superposed conveyor and pressing rollers are disposed upstream of the chopping assembly, **characterised in that** provided between the chopping assembly (1) and the conveyor and pressing rollers (4, 5) is a dividing device (7, 8, 14) which is preferably still disposed within the perpendicular projection of the conveyor and pressing rollers (4, 5) and which serves to divide a flow of crop material in strand form into at least two partial flows of crop material.

11. Apparatus according to claim 10 **characterised in that** the dividing device (7, 8, 14) has at least one horizontally disposed blade (7) which is or are stationary or oscillatingly drivable.

12. Apparatus according to claim 11 **characterised in that** guide elements (8) for guiding the partial flows (6a, 6b) of crop material are associated with the horizontally disposed blade (7) or the horizontally disposed blades (7).

13. Apparatus according to claim 10 **characterised in that** the dividing device (7, 8, 14) comprises at least one vertically disposed blade (14), wherein the at least one blade (14) is stationary or is adapted to be drivable about a horizontal axis and that each blade (14) is in the form of a circular blade.

14. Apparatus according to claim 13 **characterised in that** the chopping assembly (1) is equipped with a number of stationary, horizontal and mutually spaced cutting bars (10), said number of cutting bars corresponding to the number of the partial flows (6a, 6b) of crop material.

15. Apparatus according to claim 13 **characterised in that** the blade (14) or the blades (14) is or are arranged at the harvesting front-mounted implement (13) or directly adjoining same.

16. Apparatus according to claim 13 **characterised in that** inclined conveyors (15, 16) are connected downstream of the harvesting front-mounted implement (13) in such a way that the partial flows (6a, 6b) of crop material can be fed to the chopping assembly (1) in mutually superposed and spaced relationship.

## Revendications

1. Procédé de fonctionnement d'une ensileuse pour hacher un flux de produit récolté en forme de nappe, en particulier un flux de fourrage apte à l'ensilage qui, à partir d'un outil frontal de récolte, est amené en continu au moyen d'un dispositif d'amenage à un organe hacheur comportant un tambour hacheur entraîné en rotation, **caractérisé en ce que** le flux de produit récolté en forme de nappe (6) est divisé en au moins deux flux partiels de produit récolté (6a, 6b), et ces flux de produit récolté (6a, 6b) sont amenés à l'organe hacheur (1).

2. Procédé selon la revendication 1, **caractérisé en ce que** le flux de produit récolté (6) est divisé, dans sa direction longitudinale, en au moins deux flux partiels de produit récolté superposés et distants l'un de l'autre (6).

3. Procédé selon une ou plusieurs des revendications précédentes, **caractérisé en ce que** les épaisseurs des flux partiels de produit récolté (6a, 6b) sont égales ou approximativement égales.

4. Procédé selon la revendication 1, **caractérisé en ce que** le flux de produit récolté est divisé, dans sa direction longitudinale, en au moins deux flux partiels de produit récolté juxtaposés (6a, 6b).

5. Procédé selon la revendication 4, **caractérisé en ce que** les largeurs des flux partiels de produit récolté (6a, 6b) sont égales ou approximativement égales.

6. Procédé selon une ou plusieurs des revendications précédentes, **caractérisé en ce que** les flux partiels de produit récolté juxtaposés (6) obtenus après la division du flux de produit récolté non divisé (6) dans la direction d'écoulement sont acheminés dans une position inclinée, de façon à être amenés à l'organe hacheur (1) en étant superposés et distants l'un de l' autre .

7. Procédé selon une ou plusieurs des revendications précédentes, **caractérisé en ce que** l'organe hacheur est équipé de tambours hacheurs (2) dont le nombre correspond à celui des flux partiels de produit récolté (6).

8. Procédé selon la revendication 7, **caractérisé en ce que** les tambours hacheurs (2) peuvent être entraînés par un moyen d'entraînement commun ou par des moyens d'entraînement individuels.

9. Procédé selon une ou plusieurs des revendications précédentes 1 à 8, **caractérisé en ce que** les flux partiels de produit récolté (6a, 6b) formés à partir du flux de produit récolté (6) sont hachés au moyen de l'organe hacheur (1) de préférence avec un décalage temporel.

10. Dispositif pour mettre en oeuvre le procédé selon la revendication 1, dans lequel l'organe hacheur est précédé de préférence de deux rouleaux ameneurs et presseurs, **caractérisé en ce qu'**entre l'organe hacheur (1) et les rouleaux ameneurs et presseurs (4, 5) est prévu un dispositif diviseur (7, 8, 14) qui, en plus, se trouve de préférence à l'intérieur de la projection verticale des rouleaux ameneurs et presseurs (4, 5) et qui sert à diviser un flux de produit récolté en forme de nappe en au moins deux flux partiels de produit récolté.

11. Dispositif selon la revendication 10, **caractérisé en ce que** le dispositif diviseur (7, 8, 14) comporte au moins un couteau horizontal (7) fixe ou entraîné de manière oscillante.

12. Dispositif selon la revendication 11, **caractérisé en ce qu'**au couteau horizontal (7), respectivement aux couteaux horizontaux (7) sont associés des éléments de guidage (8) pour guider les flux partiels de produit récolté (6a, 6b).

13. Dispositif selon la revendication 10, **caractérisé en ce que** le dispositif diviseur (7, 8, 14) se compose d'au moins un couteau vertical (14), le couteau (14) au nombre d'au moins un étant fixe ou entraîné selon un axe horizontal, et **en ce que** chaque couteau (14) est conformé en couteau circulaire.

14. Dispositif selon la revendication 13, **caractérisé en ce que** l'organe hacheur (1) est équipé de barres de coupe fixes, horizontales et mutuellement espacées (10) dont le nombre correspond à celui des flux partiels de produit récolté (6a, 6b).

15. Dispositif selon la revendication 13, **caractérisé en ce que** le couteau (14), respectivement les couteaux (14) sont disposés sur l'outil frontal de récolte (13) ou de manière immédiatement adjacente à celui-ci.

16. Dispositif selon la revendication 15, **caractérisé en ce qu'**en aval de l'outil frontal de récolte (13) sont disposés des convoyeurs inclinés (15, 16), de façon que les flux partiels de produit récolté (6a, 6b) puissent être amenés à l'organe hacheur (1) en étant superposés et distants l'un de l'autre.
